# EUROPÄISCHE PATENTSCHRIFT

(11) **EP 0 654 620 B1**
(45) Veröffentlichungstag und Bekanntmachung des Hinweises auf die Patenterteilung: **11.09.1996**
(21) Anmeldenummer: 94108759.5
(22) Anmeldetag: 08.06.1994
(51) Int. Cl.: F16H 3/56

(54) **Nebenaggregateantrieb**
Auxiliary drive
Dispositif d'entraînement de groupes auxiliaires

(30) Priorität: 18.11.1993 DE 4339218
(43) Veröffentlichungstag der Anmeldung: 24.05.1995
(73) Patentinhaber: Firma Carl Freudenberg, D-69469 Weinheim (DE)
(72) Erfinder: Eckel, Hans-Gerd, Dr., D-69515 Laudenbach (DE); Hönlinger, Herwig, D-68649 Gross-Rohrheim (DE); Eichhorn, Jürgen, D-69469 Weinheim (DE)

(56) Entgegenhaltungen:
- EP-A- 0 012 669
- EP-A- 0 301 704
- EP-A- 0 346 743

## Beschreibung

Die Erfindung betrifft einen Nebenaggregateantrieb für ein Wellenende, umfassend eine Riemenscheibe, einen Planetenträger mit zumindest einem ersten und einem zweiten Planetenrad, die stark gekoppelt sind und eine voneinander abweichende Zähnezahl haben, wobei das erste Planetenrad mit einem mit der Welle umlaufenden, ersten Zahnrad in Eingriff steht und das zweite Planetenrad mit einem zweiten Zahnrad, das relativ zu der Welle verdrehbar ist, wobei eine ein- und ausschaltbare Bremse zwischen einem dauernd stillstehenden Teil und einem relativ verdrehbaren Teil vorgesehen ist sowie ein Freilauf zum Verhindern einer rückwärts gerichteten Relativverdrehung des zweiten Zahnrads, bezogen auf das Wellenende und wobei das erste und das zweite Zahnrad radial innerhalb des Planetenträgers angeordnet sind.

Ein solcher Nebenaggregateantrieb ist aus der EP-A 0 301 704 bekannt. Bei gelöster Bremse wird dabei das gesamte Drehmoment des Wellenendes über den Freilauf übertragen, was zu starkem Verschleiß und einer Verminderung der Gebrauchsdauer führen kann. Die Riemenscheibe ist dem Planetenrad und der Bremse außerdem in axialer Richtung vorgelagert. Hieraus resultiert eine große Baulänge in axialer Richtung, was wenig befriedigend ist.

Der Erfindung liegt die Aufgabe zugrunde, einem Nebenaggregat der eingangs genannten Art zu zeigen, der bei einer verminderten Baulänge in axialer Richtung wesentlich robuster ist.

Diese Aufgabe wird erfindungsgemäß bei einem Nebenaggregateantrieb der eingangs genannten Art durch die kennzeichnenden Merkmale von Anspruch 1 gelöst. Auf vorteilhafte Ausgestaltungen nehmen die Unteransprüche bezug.

Bei dem erfindungsgemäßen Nebenaggregateantrieb ist es vorgesehen, daß der Freilauf zwischen dem Planetenträger und dem relativ verdrehbaren Teil angeordnet ist, daß der relativ verdrehbare Teil und das zweite Zahnrad unverdrehbar verbunden sind, daß die Riemenscheibe den Freilauf, den Planetenträger und die Bremse zumindest teilweise radial außenseitig umschließt und daß die Riemenscheibe und der Planetenträger drehschlüssig verbunden sind. Bei gelöster Bremse resultiert hieraus eine Aufteilung des Drehmomentes, das von dem Wellenende auf den Planetenträger und damit die Riemenscheibe übertragen wird. Der Freilauf wird dadurch stark entlastet, was die Erzielung einer relativ verlängerten Ausdauer begünstigt.

Die Riemenscheibe umschließt die funktionswesentlichen Teile des Nebenaggregateantriebs zumindest teilweise in radialer Richtung. Der Nebenaggregateantrieb hat dadurch im Vergleich zu der Ausführung nach dem Stand der Technik ein wesentlich verkürzte Baulänge.

Der Planetenträger und die Riemenscheibe können durch eine Drehfeder verbunden sein, was es ermöglicht, während der bestimmungsgemäßen Verwendung auftretende Drehschwingungen zu isolieren.

Als vorteilhaft hat es sich bewährt, wenn die Drehfeder aus einem elastomeren Werkstoff besteht und einander in axialer Richtung benachbarte Flächen der Riemenscheibe und des Planetenträgers verbindet. Die Ausbildungsvariante gestattet eine besonders gute Isolierung von Drehschwingungen. Um hierbei eine radial gerichtete Ausweichbewegung der Riemenscheibe, bezogen durch die aufzunehmenden Riemenkräfte, zu verhindern, hat es sich als vorteilhaft bewährt, die Riemenscheibe relativ verdrehbar auf dem Planetenträger abzustützen, beispielsweise unter Verwendung eines zwischengeschalteten Gleit- oder Wälzlagers.

Die Riemenscheibe kann die Drehfeder bei einer Ausführung der vorgenannten Art in einem geringen radialen Abstand außenseitig umschließen. Fliehkraftbedingte Deformierungen der Drehfeder lassen sich dadurch auf ein zulässiges Höchstmaß begrenzen.

Die Relativverdrehbarkeit der Riemenscheibe, bezogen auf den Planetenträger, kann durch zumindest einen Anschlag des einen Teils begrenzt sein, der mit zumindest einem Gegenanschlag des anderen Teils in Eingriff bringbar ist. Auch diese Ausgestaltung dient letztlich der Erzielung einer besonders langen Gebrauchsdauer.

Der Anschlag und der Gegenanschlag können bei einer Ausführung der vorgenannten Art radial außenseitig von einer mit dem Wellenende starr verbundenen Schutzhülse umgriffen sein. Unfallgefahren lassen sich hierdurch vermindern. Zusätzlich besteht die Möglichkeit, an der Schutzhülse einen Trägheitsring mit Hilfe einer Gummifeder relativ verdrehbar festzulegen und zur Reduzierung von Drehschwingungen des Wellenendes zu nutzen.

Die Erfindung wird nachfolgend anhand der Zeichnungen weiter verdeutlicht. Diese nehmen bezug auf ein Nebenaggregat in halbgeschnittener Darstellung.

Der gezeigte Nebenaggregateantrieb ist zur konzentrischen Festlegung an einem Wellenende bestimmt. Dazu dient ein Gewindebolzen, der den Nebenaggregateantrieb konzentrisch durchdringt.

Auf dem Gewindebolzen ist eine Hülse 2 mittels eines Rillenkugellagers relativ verdrehbar gelagert. Diese ist im mittleren Teil ihrer axialen Erstreckung mit dem zweiten Zahnrad 5 unverdrehbar verbunden, welches in dauerndem Eingriff mit dem zweiten Planetenrad 6 des Planetenträgers 7 steht. Mit dem zweiten Planetenrad 6 ist das erste Planetenrad 8 des Planetenträgers 7 unverdrehbar verbunden. Das erste Planetenrad 6 steht mit dem ersten Zahnrad 9 in dauerndem Eingriff. Dieses ist über den Anschlußring 10 unverdrehbar mit dem Wellenende 1 verbunden sowie mit einer Hülse 11, welche die Anschläge und Gegenanschläge 12 des Planetenträgers 7 und der Riemenscheibe 13 radial außenseitig umschließt. Die Hülse 11 ist radial außenseitig von einer Gummischicht 14 umschlossen sowie von einem Trägheitsring 15, der der Reduzierung von Drehschwingungen des Wellenendes 1 dient.

Im linken Teil der Darstellung ist die Hülse 2 von einem Ringvorsprung 17 des Planetenträgers 7 radial umschlossen. Im Zwischenraum zwischen beiden ist ein Freilauf 16 angeordnet, um eine rückwärtsgerichtete Relativverdrehung des Planetenträgers 7, bezogen auf die Hülse 2 zu verhindern. Auf dem linken Ende der Hülse 2 ist der nichtdrehende Teil der Bremse 4 mittels eines Rillenkugellagers 3 relativ verdrehbar abgestützt. Zusätzlich ist der nichtdrehende Teil mittels eines nicht gezeigten Halters mit einer ortsfesten Stütze verbunden.

Der Planetenträger 7 ist mit seinem Ringvorsprung 17 mittels eines Nadellagers 19 auf dem relativ verdrehbaren Teil 18 der Bremse 4 gelagert.

Der Planetenträger 7 ist relativ unverdrehbar mit einem Stützkragen 20 verbunden, der außenseitig von einem Gleitlager 21 umschlossen ist und der relativ verdrehbaren Abstützung der Riemenscheibe 13 in radialer Richtung dient. Das Gleitlager 21 kann bedarfsweise durch ein Nadel- oder durch ein Rillenkugellager ersetzt sein.

Die Planetenträger 7 trägt im rechten Teil der Darstellung einen radial nach außen vorstehenden Flansch 23 und die Riemenscheibe 13 im linken Teil der Darstellung einen radial nach innen vorstehenden Flansch 22. Beide Flansche 22, 23 sind durch eine Drehfeder 24 relativ verdrehbar verbunden. Die Riemenscheibe 13 weist am rechten Ende zumindest einen Anschlag oder Gegenanschlag auf, der im nichtdrehenden Zustand des Nebenaggregateantriebs einen Umfangsabstand von einem Anschlag oder Gegenanschlag des Flansches 23 aufweist. Werden während der bestimmungsgemäßen Verwendung Drehkräfte über die Riemenscheibe 13 in die Drehfeder 24 eingeleitet, die deren Tragfähigkeit überschreiten, dann resultiert eine gegenseitige Berührung zwischen dem Anschlag und dem Gegenanschlag mit der Folge, daß diese Drehkräfte direkt auf den Planetenträger 7 übertragen und von der Drehfeder 24 ferngehalten werden. Eine Umkehrung der Kraftübertragungsrichtung führt zu keiner geänderten Funktion. Es ist lediglich erforderlich, den Anschlag und den Gegenanschlag hinsichtlich ihrer gegenseitigen Zuordnung umzukehren. Ausführungen, bei denen dem Anschlag in beiden Umfangsrichtungen Gegenanschläge in einem Abstand vorgelagert sind, sind ebenfalls möglich. Sie können für die Übertragung von Kräften in beiden Umfangsrichtungen eingesetzt werden.

Zur Erläuterung der allgemeinen Funktion wird nachfolgend Bezug auf eine Ausführung der vorstehend beschriebenen Art genommen, bei der der Nebenaggregateantrieb an der Kurbelwelle einer Verbrennungskraftmaschine montiert ist und beispielsweise zum Antrieb der Lichtmaschine dient. Die Drehzahl der Kurbelwelle soll in bezug auf diese Verwendung bei niedrigen Wellendrehzahlen verdoppelt werden, um die Leistung der Lichtmaschine zu erhöhen. Die Bremse 4 des Nebenaggregateantriebs wird zur Erreichung dieses Zweckes betätigt mit der Folge, daß das zweite Zahnrad 5 in eine ruhende Position gelangt. Die von dem Kurbelwellenende auf das erste Zahnrad 9 übertragene Drehbewegung hat als Folge davon eine Abwälzbewegung des ersten Planetenrades 8 zur Folge, welches mit dem zweiten Planetenrad 6 starr gekoppelt ist und eine Zähnezahl aufweist, die halb so groß ist, wie diejenige des zweiten Planetenrades 6. Die beiden Planetenräder 8, 6 werden dadurch in eine gemeinsame Rotationsbewegung versetzt, was dazu führt, daß der Planetenträger 7 das Kurbelwellenende mit einer vergrößerten Drehzahl umkreist. Diese hohe Drehzahl wird auf die Riemenscheibe 13 und von dieser auf die angeschlossene Lichtmaschine übertragen.

Bei einer hohen Kurbelwellendrehzahl ist eine entsprechende Vergrößerung der Drehgeschwindigkeiten nicht erforderlich. Die Bremse 4 wird in diesem Fall gelöst mit dem Ergebnis, daß sich die Drehzahl des Kurbelwellenendes über den Freilauf 16 unverändert auf den Planetenträger 7 überträgt und durch diesen auf die Riemenscheibe 13. Die Drehzahl der Riemenscheibe 13 stimmt folglich mit derjenigen des Kurbelwellenendes überein.

Hinsichtlich des Kraftflusses ergibt sich in diesem Falle eine Aufteilung insofern, als die Drehkräfte einerseits über den Freilauf und andererseits über die Achse der gekoppelten Planetenräder 6, 8 auf den Planetenträger 7 übertragen werden. Der Freilauf 16 wird dadurch relativ entlastet, was seine Dauerhaltbarkeit verbessert.

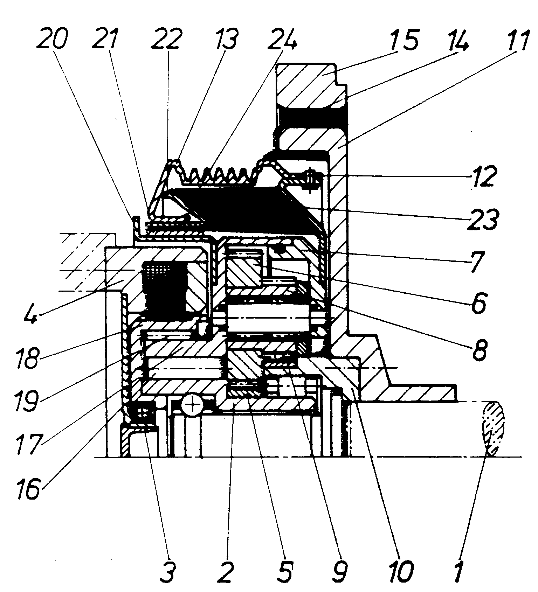

## Patentansprüche

1. Nebenaggregateantrieb für eine Welle (1), umfassend eine Riemenscheibe (13), einen Planetenträger (7) mit zumindest einem ersten und zweiten Planetenrad (8,6), die starr gekoppelt sind und eine voneinander abweichende Zähnezahl haben, wobei das erste Planetenrad (8) mit einem mit der Welle (1) umlaufenden, ersten Zahnrad (9) in Eingriff steht und das zweite Planetenrad (6) mit einem zweiten Zahnrad (5), das relativ zu der Welle (1) verdrehbar ist, wobei eine ein- und ausschaltbare Bremse (4) zwischen einem dauernd stillstehenden Teil und einem relativ verdrehbaren Teil (18) vorgesehen ist sowie ein Freilauf (16) zum Verhindern einer rückwärts gerichteten Relativverdrehung des zweiten Zahnrades (5), bezogen auf die Welle (1), und wobei das erste und das zweite Zahnrad (9,5) radial innerhalb des Planetenträgers (7) angeordnet sind, dadurch gekennzeichnet, daß der Freilauf (16) zwischen dem Planetenträger (7) und dem relativ verdrehbaren Teil (18) angeordnet ist, daß die Riemenscheibe (13) den Freilauf (16), den Planetenträger (7) und die Bremse (4) zumindest teilweise radial außenseitig umschließt und daß die Riemenscheibe (13) und der Planetenträger (7) drehschlüssig verbunden sind.

2. Nebenaggregateantrieb nach Anspruch 1, dadurch gekennzeichnet, daß der Planetenträger (7) und die Riemenscheibe (13) durch eine Drehfeder (24) verbunden sind.

3. Nebenaggregateantrieb nach Anspruch 2, dadurch gekennzeichnet, daß die Drehfeder (24) aus einem elastomeren Werkstoff besteht und einander in axialer Richtung benachbarte Flächen der Riemenscheibe (13) und des Planetenträgers (7) verbindet.

4. Nebenaggregateantrieb nach Anspruch 3, dadurch gekennzeichnet, daß die Riemenscheibe (13) relativ verdrehbar auf dem Planetenträger (7) abgestützt ist.

5. Nebenaggregateantrieb nach Anspruch 3 bis 4, dadurch gekennzeichnet, daß die Riemenscheibe (13) die Drehfeder (24) in einem geringen radialen Abstand außenseitig umschließt.

6. Nebenaggregateantrieb nach Anspruch 2 bis 5, dadurch gekennzeichnet, daß die Relativverdrehbarkeit der Riemenscheibe (13) , bezogen auf den Planetenträger (7) , durch zumindest einen Anschlag (12) des einen Teils begrenzt ist, der mit zumindest einem Gegenanschlag des anderen Teils in Eingriff bringbar ist.

7. Nebenaggregateantrieb nach Anspruch 7, dadurch gekennzeichnet, daß der Anschlag (12) und der Gegenanschlag radial außenseitig von einer mit dem Wellenende (1) starr verbundenen Schutzhülse (11) umgriffen sind.

8. Nebenaggregateantrieb nach Anspruch 7, dadurch gekennzeichnet, daß an der Schutzhülse (11) ein Trägheitsring (15) mittels einer Gummifeder (14) relativ verdrehbar festgelegt ist.

## Claims

1. An auxiliary drive for a shaft (1), comprising a pulley (13), a planet carrier (7) having at least one first and second planet wheel (8, 6) which are rigidly coupled and have a differing number of teeth, the first planet wheel (8) being engaged with a first gearwheel (9), which rotates with the shaft (1), and the second planet wheel (6) with a second gearwheel (5), which can be turned relative to the shaft (1), a switch-on and switch-off brake (4) being provided between a permanently stationary part and a relatively turnable part (18) and a freewheel (16) being provided for preventing the second gearwheel (5) from being turned back in relation to the shaft (1), and the first and second gearwheels (9, 5) being disposed radially within the planet carrier (7), characterized in that the freewheel (16) is disposed between the planet carrier (7) and the relatively turnable part (18), in that the pulley (13) at least partially encloses the freewheel (16), the planet carrier (7) and the brake (4) radially on the outside, and in that the pulley (13) and the planet carrier (7) are connected in rotationally locking engagement.

2. An auxiliary drive according to claim 1, characterized in that the planet carrier (7) and the pulley (13) are connected by a torsion spring (24).

3. An auxiliary drive according to claim 2, characterized in that the torsion spring (24) consists of an elastomeric material and connects axially adjacent faces of the pulley (13) and of the planet carrier (7).

4. An auxiliary drive according to claim 3, characterized in that the pulley (13) is supported on the planet carrier (7) such that it can be turned relative thereto.

5. An auxiliary drive according to either of claims 3 and 4, characterized in that the pulley (13) encloses the torsion spring (24) on the outside at a small radial distance from it.

6. An auxiliary drive according to any of claims 2 to 5, characterized in that the relative turnability of the pulley (13) in relation to the planet carrier (7) is limited by at least one stop (12) of the one part, which stop can be brought into engagement with at least one counter-stop of the other part.

7. An auxiliary drive according to claim 7, characterized in that the stop (12) and the counter-stop are embraced radially on the outside by a protective sleeve (11) rigidly connected to the shaft (1).

8. An auxiliary drive according to claim 7, characterized in that an inertia ring (15) is secured to the protective sleeve (11), such that it can be turned relative thereto, by means of a rubber spring (14).

## Revendications

1. Dispositif d'entraînement de groupes auxiliaires pour un arbre (1), comprenant une poulie (13), un porte-pignons satellites (7) avec au moins un premier et un deuxième pignon satellite (8, 6), lesquels sont connectés rigidement et dont le nombre de dents est différent, le premier pignon satellite (8) étant en prise avec une première roue dentée (9) tournant avec l'arbre (1) et le deuxième pignon satellite (6) avec une deuxième roue dentée (5) pivotable par rapport à l'arbre (1), un frein (4) enclenchable et déclenchable étant prévu entre une partie fixe en permanence et une partie relativement pivotable (18), ainsi qu'une roue libre (16) pour empêcher une rotation relative vers l'arrière de la deuxième roue dentée (5) par rapport à l'arbre (1), et la première et la deuxième roue dentée (9, 5) étant disposées radialement à l'intérieur du porte-pignons satellites (7), caractérisé en ce que la roue libre (16) est disposée entre le porte-pignons satellites (7) et la partie relativement pivotable (18), en ce que la poulie (13) enveloppe la roue libre (16), le porte-pignons satellites (7) et le frein (4) au moins partiellement à l'extérieur dans le sens radial et en ce que la poulie (13) et le porte-pignons satellites (7) sont reliés de façon à pivoter ensemble.

2. Dispositif d'entraînement de groupes auxiliaires selon la revendication 1, caractérisé en ce que le porte-pignons satellites (7) et la poulie (13) sont reliés par un ressort de torsion (24).

3. Dispositif d'entraînement de groupes auxiliaires selon la revendication 2, caractérisé en ce que le ressort de torsion (24) est en matériau élastomère et relie des surfaces axialement contiguës de la poulie (13) et du porte-pignons satellites (7).

4. Dispositif d'entraînement de groupes auxiliaires selon la revendication 3, caractérisé en ce que la poulie (13) s'appuie de manière relativement pivotable sur le porte-pignons satellites (7).

5. Dispositif d'entraînement de groupes auxiliaires selon l'une des revendications 3 à 4, caractérisé en ce que la poulie (13) enveloppe à l'extérieur avec une faible distance radiale le ressort de torsion (24).

6. Dispositif d'entraînement de groupes auxiliaires selon l'une des revendications 2 à 5, caractérisé en ce que la capacité à pivoter relativement de la poulie (13) par rapport au porte-pignons satellites (7) est limitée à cause d'au moins une butée (12) d'une des parties qui peut être mise en prise avec au moins une contre-butée de l'autre des parties.

7. Dispositif d'entraînement de groupes auxiliaires selon la revendication 7, caractérisé en ce que la butée (12) et la contre-butée sont enveloppées à l'extérieur par un fourreau de protection (11) connecté rigidement au bout d'arbre (1).

8. Dispositif d'entraînement de groupes auxiliaires selon la revendication 7, caractérisé en ce qu'une bague d'inertie (15) est fixée de manière relativement pivotable sur le fourreau de protection (11), au moyen d'un ressort en caoutchouc (14).
